# EUROPEAN PATENT SPECIFICATION

(11) **EP 2 179 617 B1**
(45) Date of publication and mention of the grant of the patent: **15.07.2020**
(21) Application number: 08807296.2
(22) Date of filing: 12.08.2008
(51) Int. Cl.: H04W 4/02, H04W 48/14, H04W 24/02, H04W 60/00

(54) **REGISTRATION OF WIRELESS NODE**
REGISTRIERUNG DRAHTLOSER KNOTEN
ENREGISTREMENT D'UN NOEUD SANS FIL

(30) Priority: 13.08.2007 US 955446 P; 31.07.2008 US 183838
(43) Date of publication of application: 28.04.2010
(73) Proprietor: Nokia Technologies Oy, 02610 Espoo (FI)
(72) Inventor: DOPPLER, Klaus, FI-02200 Espoo (FI); WITJING, Carl Simon, FI-02230 Espoo (FI); KERMOAL, Jean-Philippe, 2300 Copenhagen S. (DK)
(74) Representative: Espatent Oy
(86) International application number: PCT/IB2008/053237
(87) International publication number: WO 2009/022296

(56) References cited:
- EP-A1- 1 758 414
- EP-A1- 1 773 085
- WO-A2-2006/124221
- US-A- 5 864 764
- US-A1- 2003 069 014
- US-A1- 2005 148 368
- US-A1- 2006 126 564
- US-A1- 2007 064 655
- US-A1- 2008 076 420
- XINGWEI WANG ET AL.: 'Wireless Internet; draft-wang-mpqn-based-fsfr3-00.txt' IETF STANDARD-WORKING-DRAFT, INTERNET ENGINEERING TASK FORCE, IETF, CH 01 February 2004, ISSN 0000-0004 XP015036642

## Description

### TECHNICAL FIELD

This description relates to wireless networks.

### BACKGROUND

Wireless networks may use spectral resources, such as different time slots, frequencies or carriers or subcarriers, or other spectral resources. More than one wireless network may be present in a geographical location. These networks may be of the same radio technology or of different radio technologies and may operate in the same frequency band. Thus, the spectrum resources can potentially be shared among these wireless networks. Different wireless networks typically use different resources to decrease interference. However, spectral resources available to a wireless network may not always be allocated to make efficient use of the resources. For example, the spectral resources allocated to each wireless network may not always correspond to the wireless network's load.

EP 1758414 (A1) discloses an autonomous cell shaping method for allowing a wireless base station to autonomously determine a radio frequency and a transmission power. For example, a wireless base station to be newly installed collects, in an on-demand manner and without using radio wave information, cell setting information that includes the position information, the transmission power information, and the radio frequency information of the neighboring base stations and determines the radio frequency and the transmission power of the newly-installed wireless base station itself, based on the cell setting information of the neighboring base stations.

US 2005148368 (A1) discloses a radio base station in a mobile communication network that collects information about the network and exchanges data with a configuration device, the Internet System Manager (iSM). The iSM automatically configures and integrates the base station into the network by defining configuration parameter settings that allow full interoperation of the base station with the network, with regards to roaming and handover in particular, without the need to add or modify parameter settings in other existing network elements.

US 5864764 (A) discloses that infrastructure transceivers operate in a configuration mode and an active mode. When in the configuration mode, a given infrastructure transceiver derives information regarding RF operating circumstances proximal to the infrastructure transceiver. The information regarding the RF operating circumstances, information regarding the infrastructure transceiver itself, and optionally information regarding present location of the infrastructure transceiver, is transmitted to a communication system configuration server. In response, information regarding operation of the infrastructure transceiver is received by the infrastructure transceiver. When in the given infrastructure transceiver is in the active mode, the information regarding operation of the infrastructure transceiver is used to support communications in the RF communication system. With each infrastructure transceiver operating in this manner, the radio frequency communication system can be automatically configured.

### SUMMARY

The invention is defined by the independent claims. According to one example embodiment, a method may include sending, by a wireless node, a registration request message, the registration request message including location-related information for the wireless node and a transmission power of the wireless node. The method may further include receiving a neighbor list message, the neighbor list message including a list of registered neighboring wireless nodes, the list indicating a spectral allocation for each registered neighboring wireless node.

According to another example embodiment, a method may include receiving, from a wireless node, a registration request message, the registration request message including location-related information for the wireless node and a transmission power of the wireless node. The method may further include sending a neighbor list message to the wireless node, the neighbor list message including a list of registered neighboring wireless nodes, the list being based on the location and transmission power indicated by the registration request message.

According to one example embodiment, a method may include sending, by a wireless node, a registration request message, the registration request message including location-related information for the wireless node and communication-related information for the wireless node. The method may further include receiving a neighbor list message, the neighbor list message including a list of registered neighboring wireless nodes, the list indicating communication-related information for each registered neighboring wireless node.

According to another example embodiment, a method may include receiving, from a wireless node, a registration request message, the registration request message including location-related information for the wireless node and communication-related information for the wireless node. The method may further include sending a neighbor list message to the wireless node, the neighbor list message including a list of registered neighboring wireless nodes, the list being based on the location and communication-related information indicated by the registration request message.

According to another example embodiment, an apparatus may include a controller. The apparatus may be configured to send, by a wireless node, a registration request message, the registration request message including location-related information for the wireless node and communication-related information for the wireless node. The apparatus may be further configured to receive a neighbor list message, the neighbor list message including a list of registered neighboring wireless nodes, the list indicating communication-related information for each registered neighboring wireless node.

According to another example embodiment, an apparatus may include a controller. The apparatus may be configured to receive, from a wireless node, a registration request message, the registration request message including location-related information for the wireless node and communication-related information for the wireless node. The apparatus may be further configured to send a neighbor list message to the wireless node, the neighbor list message including a list of registered neighboring wireless nodes, the list being based on the location and communication-related information indicated by the registration request message.

The details of one or more implementations are set forth in the accompanying drawings and the description below. Other features will be apparent from the description and drawings, and from the claims.

### BRIEF DESCRIPTION OF THE DRAWINGS

FIG. 1 is a block diagram showing a wireless network and associated objects according to an example embodiment.
FIG. 2 is a vertical-time sequence diagram showing a wireless node send a registration request message and receive a neighbor list message from a location database according to an example embodiment.
FIG. 3 is a vertical-time sequence diagram showing the wireless node send a scan request message and receive a scan result message from one or more user terminals according to an example embodiment.
FIG. 4 is a vertical-time sequence diagram showing the wireless node send an updated neighbor list message and receive an update acknowledgment message from the location database according to an example embodiment.
FIG. 5 is a vertical-time sequence diagram showing the wireless node send a request neighbor list message and receive a neighbor list for sharing message from the location database according to an example embodiment.
FIG. 6A is a block diagram showing a registration request message according to an example embodiment.
FIG. 6B is a block diagram showing a registration request message according to another example embodiment.
FIG. 7 is a block diagram showing a registration acknowledgment message according to an example embodiment.
FIG. 8 is a block diagram showing a neighbor list message according to an example embodiment.
FIG. 9 is a block diagram showing a scan request message according to an example embodiment.
FIG. 10 is a block diagram showing a scan result message according to an example embodiment.
FIG. 11 is a block diagram showing an updated neighbor list message according to an example embodiment.
FIG. 12 is a block diagram showing an update acknowledgment message according to an example embodiment.
FIG. 13 is a block diagram showing a request neighbor list message according to an example embodiment.
FIG. 14 is a block diagram showing a neighbor list for sharing message according to an example embodiment.
FIG. 15 is a flowchart showing a method according to an example embodiment.
FIG. 16 is a flowchart showing a method according to another example embodiment.
FIG. 17 is a block diagram showing an apparatus according to an example embodiment.

### DETAILED DESCRIPTION

Wireless nodes or access points may lend spectral resources to each other to make more efficient use of the available spectral resources. For example, if a wireless node's spectral resources exceed its current need for spectral resources, the wireless node may lend some of its spectral resources, such as one or more portions of its bandwidth, to another wireless node which has an immediate need for the loaned spectral resources.

When a wireless node seeks to borrow spectral resources, it may be desirable to know the locations, carrier frequency, bandwidth, technology, and/or available capacity of neighboring wireless nodes. This information may be useful in determining which wireless node to borrow spectral resources from, for example. Further, wireless networks, such as radio access networks, may have differing cell structures, complicating the patterns of overlapping cells and making knowledge of spectrum changes important in selecting the wireless node from which to borrow spectral resources. Acquiring information about neighboring wireless nodes without having to communicate directly with the neighboring wireless nodes may make efficient use of time and/or power.

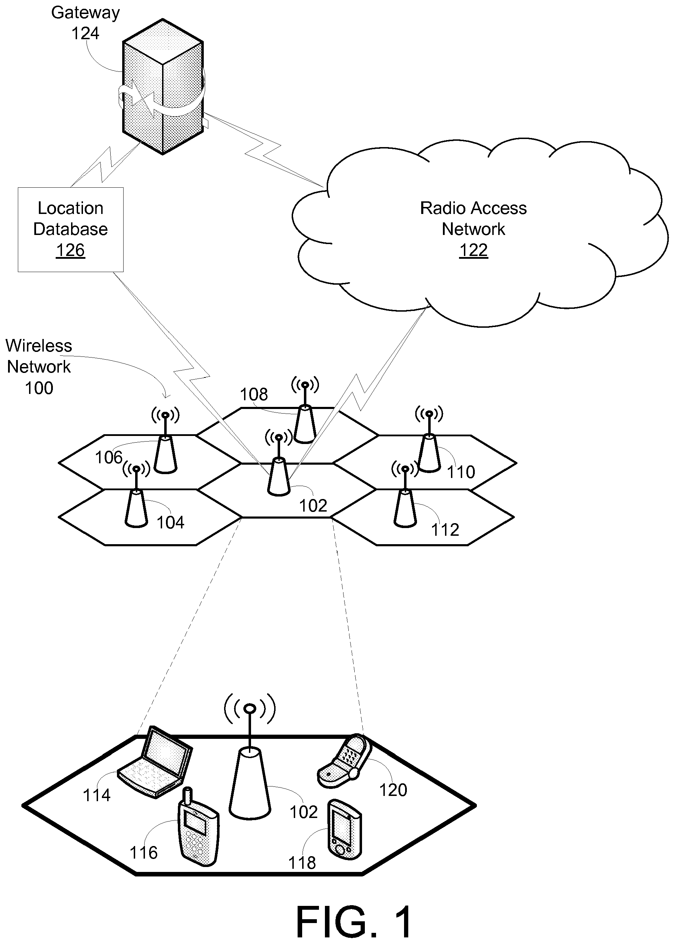

FIG. 1 is a block diagram showing a wireless network 100 and associated objects according to an example embodiment. The wireless network 100 may include, for example, a radio access network (RAN), a cellular telephone network, an IEEE 802.11 wireless local area network (WLAN), an 802.16 wireless metropolitan area network (WiMAX), a Wireless Worldwide Initiative New Radio (WINNER) network, or other wireless network.

The wireless network 100 may include a plurality of wireless nodes 102, 104, 106, 108, 110, 112. Each wireless node, such as wireless node 102, may include, for example, a cellular base station, a node B, a WLAN, WiMAX, or an access point as specified by the European IST-WINNER project, referred to as a WINNER access point (AP), or a relay station. The wireless node 102 may serve any number of user terminals 114, 116, 118, 120 within a geographical area that may be referred to as a "cell." The user terminals 114, 116, 118, 120 may include, for example, laptop or notebook computers, smartphones, personal digital assistants (PDAs), cellular telephones, WLAN devices, WiMAX devices, and/or WINNER devices.

The wireless node 102 may communicate or share spectrum with a radio access network 122. The radio access network 122 may have an overlapping coverage area with the wireless node 102 and other wireless nodes 104, 106, 108, 110, 112 in the wireless network 100. Coordination between the networks 100, 122 may reduce interference by reducing or preventing use of overlapping spectral resources. The radio access network 122 may use a same or different technology from the wireless network 100. Use of a common technology, such as WINNER, may facilitate the sharing of spectral resources.

The wireless network 100 may communicate with the radio access network 122 via the wireless nodes 102, 104, 106, 108, 110, 112, or via a higher-level node, such as a gateway 124. The gateway 124 may negotiate spectral resource sharing with other networks, such as the radio access network 122, on behalf of the wireless nodes 102, 104, 106, 108, 110, 112 in the wireless network 100.

A location database 126, such as a spectrum manager, may store information, such as node identification (ID), location, transmission power, transmission range, coverage area, currently used carrier frequency or frequencies, duplexing scheme, operating carrier frequency range, operating time (such as days of the week and/or hours of the day), currently used bandwidth, maximum bandwidth, class (such as indoor/outdoor, antenna configuration, or technology or protocol), and/or spectral capacity, for each wireless node within either or both networks 100, 122 or within a specified geographical area. The location database 126 may be shared by the networks 100, 122, or each network 100, 122 may be associated with its own location database 126 which compiles and stores information about the wireless nodes. The location database 126 may also store information concerning unidentified nodes and/or networks that are detected in the operating range.

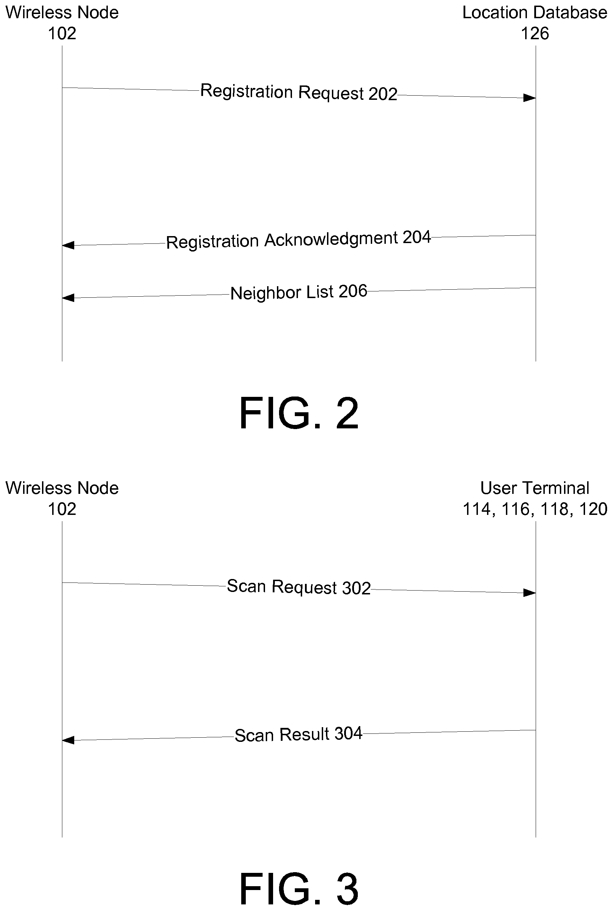

FIG. 2 is a vertical-time sequence diagram showing the wireless node 102 send a registration request message 202 and receive a neighbor list message 206 from a location database 126 according to an example embodiment. According to this example, the wireless node 102 may contact and register with the location database 126. The wireless node 102 may register with the location database 126 upon powering on or moving within an area served by the location database 126, for example.

The wireless node 102 may send the registration request message 202 to the location database 126. The registration request message 202 may include location-related information for the wireless node 102 and/or communication-related information for the wireless node 102, according to an example embodiment. The location-related information may include information identifying a specific physical location of the wireless node 102, and/or information based upon which a recipient of the location-related information may determine or estimate a location of the wireless node 102.

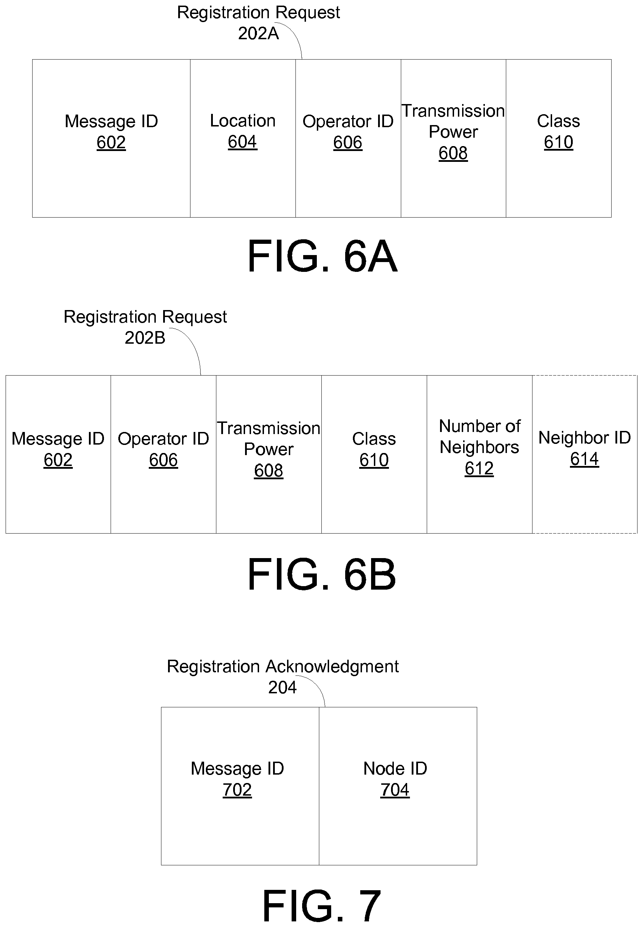

In an example in which the wireless node 102 may have determined its location, such as by using a global positioning system (GPS) for example, the wireless node 102 may send the location database 126 a registration request message 202, such as the registration request message 202A described with reference to FIG. 6A (which may include the wireless node's 102 location). In this example, the wireless node 102 may send to the location database 126 the registration request message 202 identifying a specific physical location of the wireless node 102. For example, the wireless node 102 may measure a distance between the wireless node 102 and a plurality of global positioning satellites, determine geographical coordinates of the wireless node 102 based on the measuring, and include the coordinates in the registration request message 202.

In an example in which the wireless node 102 may not have determined its location, the wireless node 102 may scan the spectrum for neighboring wireless nodes, and send the location database 126 a registration request message 202, such as the registration request message 202B described with reference to FIG. 6B, which may include a list of the detected neighboring wireless nodes. The wireless node 102 may have identified the detected neighboring wireless nodes by, for example, a broadcasted ID, such as a global unique ID. The location database 126 may have stored the locations of the detected neighboring wireless nodes, and may determine or estimate the location of the wireless node 102 based on the wireless node's 102 proximity to the detected neighboring wireless nodes. The location of the wireless node 102 and/or detected neighboring wireless nodes may be stored and/or represented as geographical coordinates, and/or based on a topology of the registered wireless nodes, such as by the relative positions of the registered wireless nodes.

If the wireless node 102 could not determine its location and could not detect any other wireless nodes, then the wireless node 102 may register with the location database 126 without a location.

The communication-related information may indicate any of a number of communication-related parameters. For example, the communication-related information may indicate a transmission power of the wireless node 102, whether the wireless node 102 is installed indoors or outdoors, a maximum coverage area of the wireless node 102, an operation time (such as days of the week and/or hours of the day) of the wireless node 102, radio standard(s) used by the wireless node 102, a duplexing scheme (e.g. frequency-division duplexing or time-division duplexing) used by the wireless node 102, and/or at least one carrier frequency range used by the wireless node 102 (in the case of frequency-division duplexing, the wireless node 102 may use two frequency ranges, according to an example embodiment).

In response to receiving the registration request message 202, the location database 126 may send the wireless node 102 a registration acknowledgment 204. The registration acknowledgment 204, described further with reference to FIG. 7, may include a node identification (ID) assigned to the wireless node 102. The node ID may be a unique ID, such as a medium access control (MAC) address, Internet Protocol (IP) address, or a global unique ID, according to example embodiments.

The location database 126 may send a neighbor list message 206 to the wireless node 102 after sending the registration acknowledgment 204, according to an example embodiment. According to another example embodiment, the registration acknowledgment 204 may be included in the neighbor list message 206, or the neighbor list message 206 may itself serve as an acknowledgment of receiving the registration request message 202.

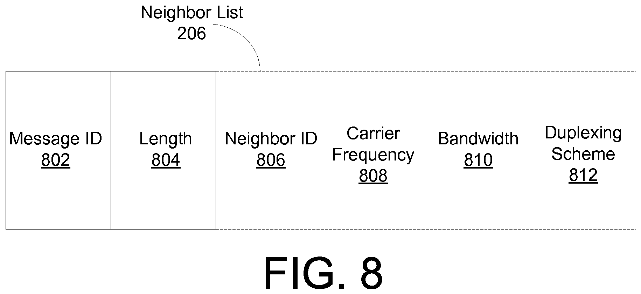

The neighbor list message 206, which is described in further detail with reference to FIG. 8, may include a list of neighboring wireless nodes. The list may be determined based, for example, on the proximity of the wireless nodes (based on either the location provided by the wireless node 102 in the registration request message 202, or by estimating the location of the wireless node 102 based on the list of wireless nodes provided by the wireless node 102 in the registration request message 202), the communication-related information for the wireless node 102 such as the transmission power of the wireless node 102 and/or other wireless nodes, and/or path loss factors of the wireless node 102 and/or other wireless nodes, such as carrier frequency and/or installation type (indoor or outdoor). The neighbor list message 206 may include communication-related information for each wireless node in the list, such as spectral allocation or radio technology.

FIG. 3 is a vertical-time sequence diagram showing the wireless node 102 send a scan request message 302 and receive a scan result message 304 from one or more user terminals 104, 106, 108, 110, 112 according to an example embodiment. After registering with the location database 126, the wireless node 102 may be assigned spectral resources, such as a frequency or bandwidth via which to send and/or receive data. Some of the neighboring wireless nodes with overlapping coverage areas may be "hidden" from the wireless node 102, such as because their signals are not strong enough to be detected by the wireless node 102, but are strong enough to be detected by, and/or interfere with signals received by, user terminals 114, 116, 118, 120 served by the wireless node.

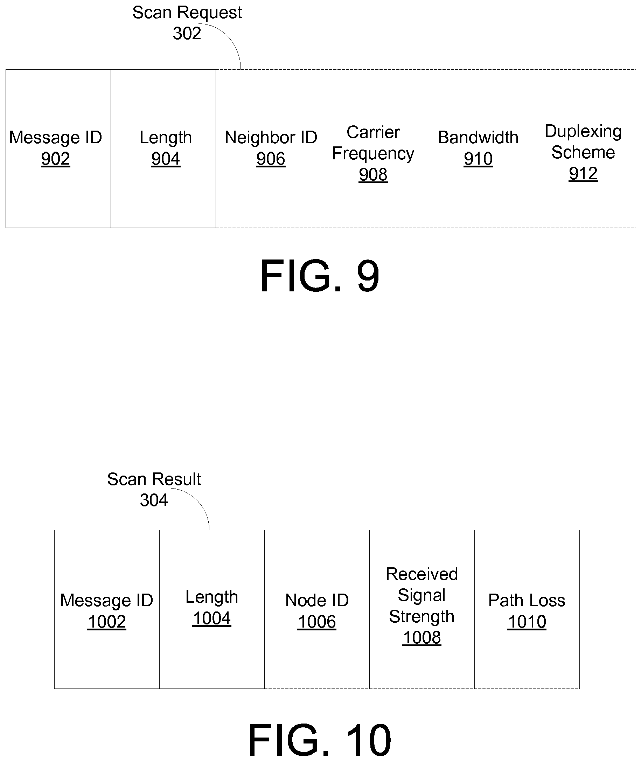

To determine which wireless nodes may be sending signals into the wireless node's 102 coverage area, the wireless node 102 may send the scan request message 302 to one or more of the user terminals 114, 116, 118, 120 within the wireless node's coverage area. The scan request message 302, which is described further with reference to FIG. 9, may include the list of wireless nodes provided by the location database 126 in the neighbor list 206. In response to receiving the scan request message 302, the user terminal(s) 114, 116, 118, 120 may scan the spectrum for the wireless nodes included in the scan request message 302. After scanning the spectrum, the user terminal(s) 114, 116, 118, 120 may send the scan result message 304 to the wireless node 102. The scan result message 304, which is described in further detail with reference to FIG. 10, may include some or all of the wireless nodes included in the scan request message 302 (the inclusion of the wireless nodes may be based on whether they were detected by the user terminal(s) 114, 116, 118, 120), and may include information about the signals received from the wireless nodes, such as received signal strength and/or path loss, according to an example embodiment.

In the example in which the wireless node 102 was unable to determine its location and was unable to detect any other wireless nodes, the wireless node 102 may send the user terminals 114, 116, 118, 120 a scan request message 302 requesting the user terminals 114, 116, 118, 120 to scan the entire spectrum for any wireless nodes. The scan result message 304 may then include all wireless nodes detected by the user terminals 114, 116, 118, 120, which may be used to determine the location of the wireless node 102.

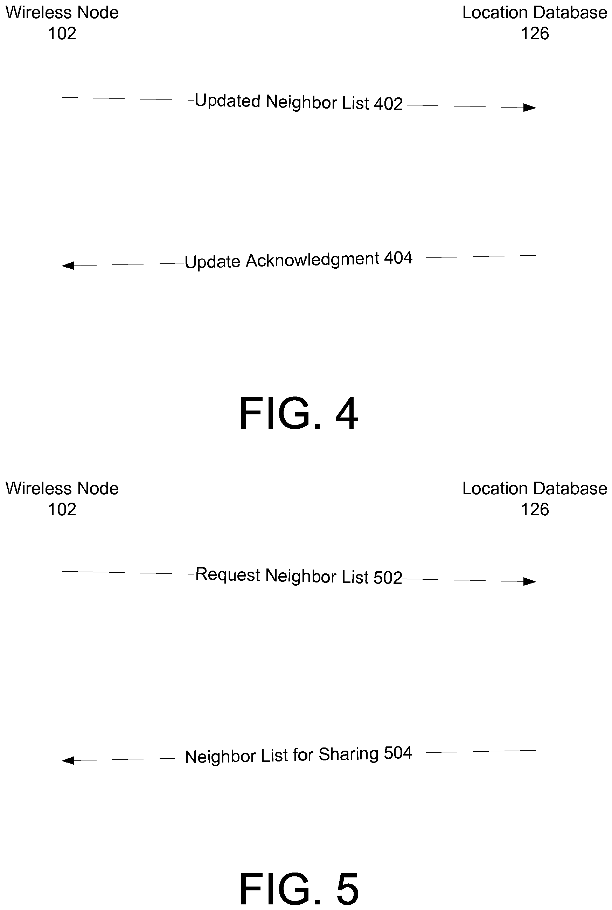

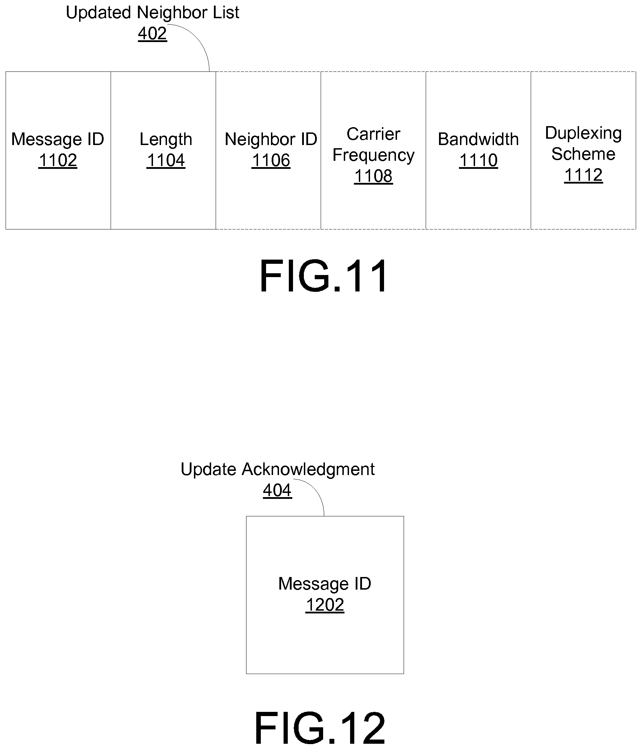

FIG. 4 is a vertical-time sequence diagram showing the wireless node 102 send an updated neighbor list message 402 and receive an update acknowledgment message 404 from the location database 126 according to an example embodiment. After the wireless node 102 has determined which wireless nodes have overlapping coverage areas with the wireless node 102, the wireless node 102 may notify the location database 126 by sending an updated neighbor list message 402 to the location database 126. The updated neighbor list message 402, which is described in further detail with reference to FIG. 11, may include a list of wireless nodes which have overlapping coverage areas with the wireless node 102. The list may be based on the scan result message(s) 304 received by the wireless node 102, and may include information about each wireless node, such as carrier frequency, bandwidth, and/or technology. In response to receiving the updated neighbor list message 402, the location database 126 may update its database of wireless nodes, such as by updating which wireless nodes have overlapping coverage areas. The location database 126 may also send an update acknowledgment 404, described with reference to FIG. 12, to the wireless node 102.

FIG. 5 is a vertical-time sequence diagram showing the wireless node 102 send a request neighbor list message 502 and receive a neighbor list for sharing message 504 from the location database 126 according to an example embodiment. When the wireless node 102 seeks to borrow or obtain spectral resources from a neighboring wireless node, it may be desirable to obtain information about the neighboring nodes from the location database 126. Obtaining information from the location database 126, rather than polling the neighboring wireless nodes and/or user terminals 114, 116, 118, 120, may reduce processing and/or signaling overhead.

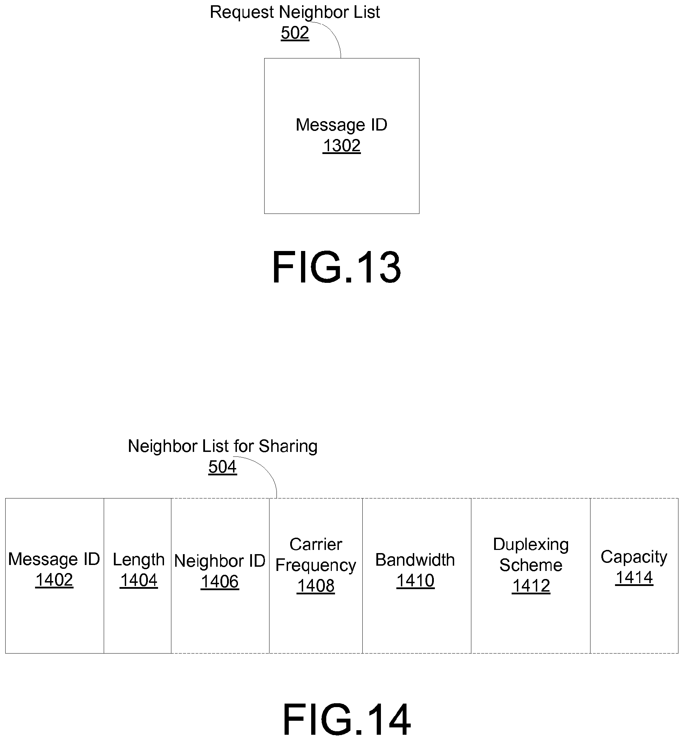

If the networks 100, 122 share the location database 126, then the wireless node 102 may send the request neighbor list message 502, described with reference to FIG. 13, to the shared location database 126. If the networks 100, 122 are each associated with their own location database, then the wireless node 102 may send the request neighbor list message 502 to a location database associated with the radio access network 122; the request neighbor list message 502 may be sent directly to the location database, or may be routed through a wireless node which is part of the radio access network 122.

In response to receiving the request neighbor list message 502, the location database 126 may send the neighbor list for sharing message 504 to the wireless node 102. According to an example embodiment, the neighboring wireless nodes may have registered with the location database 126 in a manner similar to that of the wireless node 102 registering with the location database 126 described above. The neighbor list for sharing message 504, which is described further with reference to FIG. 14, may include a list of neighboring wireless nodes, and may include information about the wireless nodes which may assist the wireless node 102 in determining which wireless node to request to borrow spectral resources from, such as carrier frequency, bandwidth, technology or duplexing scheme, and/or available spectral capacity, according to example embodiments. Based on this information, such as the available spectral capacity, the wireless node 102 may send a request to borrow spectral capacity to at least one of the neighboring wireless nodes.

FIG. 6A is a block diagram showing the registration request message 202A according to an example embodiment. In this example, the wireless node 102 may have determined its physical location, such as based on measuring the wireless node's 102 distance from a plurality of global positioning satellites. The registration request message 202A may include a message ID field 602 identifying the message as a registration request message, or as a registration request with location message.

The registration request message 202A may include the location-related information in, for example, a location field 604. The location field 604 may identify a specific physical location of the wireless node 102, such as by including geographical coordinates (e.g., latitude and longitude). The wireless node 102 may have determined the specific physical location based, for example, on the global positioning satellites.

The registration request message 202A may further include an operator ID field 606. The operator ID field 606 may identify an operator of the wireless node 102 or the wireless network 100 of which the wireless node 102 is a member.

The communication-related information for the wireless node 102 may be included in, for example, a transmission power field 608 and/or a class field 610. The registration request message 202A may include the transmission power field 608, which may indicate a maximum transmission power of the wireless node 102, according to an example embodiment. The maximum transmission power of the wireless node 102 may be useful in determining the coverage area or interference of the wireless node 102.

The registration request message 202A may also include the class field 610, which may indicate, for example, an access point class of the wireless node 102. The class field 610 may indicate, for example, whether the wireless node 102 is installed indoors or outdoors, which may affect, for example, a path loss of the wireless node 102, a coverage area of the wireless node 102, and/or a determined neighbor list of the wireless node 102. The class field 610 may also indicate an antenna configuration of the wireless node 102 (e.g., four antenna array with seven dB antenna gain), which may also affect a path loss of the wireless node 102, a coverage area of the wireless node 102, and/or a determined neighbor list of the wireless node 102. The class field 610 may also indicate a modulation, encoding, and/or duplexing scheme used by the wireless node 102, which may be useful in allocating spectrum between the various nodes.

FIG. 6B is a block diagram showing the registration request message 202B according to another example embodiment. According to this example, the registration request message 202B may include a list of detected wireless nodes.

The wireless node 102 may send the registration request message 202B to the location database 226 in the example in which the wireless node 102 has not determined its location, but has scanned the spectrum for neighboring wireless nodes. The wireless node 102 may have detected a plurality of wireless nodes, and may have acquired IDs for each of the wireless nodes. The IDs may have been assigned to the detected wireless nodes by the location database 126, or by a location database for the respective networks of which the wireless nodes may be members.

In this example, the registration request message 202B may include a number of neighbors field 612. The number of neighbors field 612 may indicate a number of wireless nodes which were detected by the wireless node 102, and may indicate a length of the list of detected wireless nodes in the registration request message 202B. The list of detected wireless nodes may include number of neighbor ID fields 614 indicated by the number of neighbor fields 612. The dashed lines above and below the neighbor ID field 614 show that a plurality of neighbor ID fields 614 may be included in the registration request message 202B. Each neighbor ID field 614 may include an ID for each detected wireless node. The location database 126 may have stored the locations of each of the wireless nodes based on their IDs. The location database 126 may be able to estimate the location of the wireless node 102 based on the IDs of the detected neighboring wireless nodes, which may be included in the list of detected neighboring wireless nodes.

In response to receiving the registration request from the wireless node 102, the location database 126 may send the registration acknowledgment message 204 to the wireless node 102. FIG. 7 is a block diagram showing the registration acknowledgment message 204 according to an example embodiment. According to this example, the registration acknowledgment message 204 may include a message ID field 702 and a node ID field 704. The message ID field 702 may indicate that the registration acknowledgment message 204 is a registration acknowledgment message. The node ID field 704 may include a node identification (ID) assigned to the wireless node 102. The node ID, which may be a MAC address, IP address, or other global unique ID, or other ID or address, may be associated with the wireless node 102 and used to store information about the wireless node 102, such as location, operator ID, transmission power, indoor or outdoor installation, antenna configuration, used technology, frequency, bandwidth, modulation, encoding, and/or duplexing schemes, path loss and/or available spectral capacity. The wireless node 102 may use the node ID to identify itself to other wireless nodes, location databases, gateways, or other devices.

After sending the registration acknowledgment message 204 to the wireless node 102, the location database 126 may send the neighbor list message 206 to the wireless node 102. The neighbor list message 206 may include a list of registered neighboring wireless nodes which may have coverage areas that overlap with the coverage area of the wireless node 102. The location database may include the wireless nodes in the list based on, for example, a physical location, a transmission power, a class (such as indoor or outdoor installation, antenna configuration, a modulation, encoding, and/or duplexing scheme), a carrier frequency, a bandwidth, and/or a path loss of the wireless node 102 and the other wireless nodes.

FIG. 8 is a block diagram showing the neighbor list message 206 according to an example embodiment. According to this example, the neighbor list message 206 may include a message ID field 802 identifying the neighbor list message 206 as a neighbor list, and a length field 804 indicating a number of registered wireless nodes included in the list of registered wireless nodes.

The list of registered wireless nodes may include, for each registered wireless node in the list, communication-related information, such as spectral allocation and/or radio technology for the registered wireless node. According to the example embodiment shown in FIG. 8, the communication-related information may be included in a neighbor ID field 806, a carrier frequency field 808, a bandwidth field 810, and/or a duplexing scheme field 812. The dashed lines above and below these fields shown in FIG. 8 show that the neighbor list message 206 may include a plurality of these fields; the number of each of these fields may correspond to the number of registered wireless nodes indicated by the length field 804.

The neighbor ID field 806 may indicate the node ID of the registered wireless node, which may have been assigned to the wireless node in a manner similar to the assignment of the node ID included in the node ID field 704 to the wireless node 102. The carrier frequency field 808 may indicate at least one carrier frequency of the wireless node. According to an example in which the wireless node uses frequency-division duplexing, the carrier frequency field 808 may indicate an uplink carrier frequency and a downlink carrier frequency for the wireless node. Or, the carrier frequency field 808 may include only the uplink carrier frequency or the downlink frequency, leaving the other frequency to be calculated based on a predetermined frequency gap between the uplink carrier frequency and the downlink carrier frequency.

The bandwidth field 810 may indicate a bandwidth, or other measure of spectral resources, used by or allocated to the wireless node. The duplexing scheme field 812 may indicate a duplexing scheme, such as time-division duplexing (TDD) or frequency-division duplexing (FDD), used by the wireless node.

As discussed with reference to FIG. 3, the wireless node 102 may request that any number of the user terminals 114, 116, 118, 120 scan the spectrum, such as by sending the scan request message 302 to the user terminals 114, 116, 118, 120. The scan request message 302 may include the list of registered neighboring wireless nodes included in the neighbor list message 206 which was received by the wireless node 102.

FIG. 9 is a block diagram showing the scan request message 302 according to an example embodiment. The scan request message 302 may include a message ID field 902 identifying the scan request message 302 as a scan request message. The scan request message 302 may also include the list of registered neighboring wireless nodes. The list of registered neighboring wireless nodes may include a length field 904, and, for each wireless node included in the list of registered neighboring wireless nodes, a neighbor ID field 906, a carrier frequency field 908, a bandwidth field 910, and/or a duplexing scheme field 912. The length field 904, neighbor ID field 906, a carrier frequency field 908, a bandwidth field 910, and duplexing scheme field 912 may correspond to and/or contain information similar to the length field 804, neighbor ID field 806, carrier frequency field 808, bandwidth field 810, and duplexing scheme field 812 described with reference to FIG. 8.

The user terminals 114, 116, 118, 120 which received the scan request message 302 may, in response, scan the spectrum for the registered neighboring wireless nodes, and may detect some or all of the wireless nodes included in the list of registered neighboring wireless nodes. After scanning the spectrum, each of the user terminals 114, 116, 118, 120 which received the scan request message 302 may send the scan result message 304 to the wireless node 102. The scan result message 304 may include a list of the detected wireless nodes, which may include at least some of the registered neighboring wireless nodes included in the list of registered neighboring wireless nodes.

FIG. 10 is a block diagram showing the scan result message 304 according to an example embodiment. In this example, the scan result message 304 may include a message ID field 1002 identifying the scan result message 304 as a scan result message. The scan result message 304 may also include a length field 1004 indicating a number of wireless nodes in the list of registered neighboring wireless nodes which were detected by the user terminal 114, 116, 118, 120. The list of detected registered wireless nodes may include a node ID field 1006, a received signal strength field 1008, and/or a path loss field 1010 for each wireless node in the list. The dashed lines above and below these fields show that a plurality of these fields may be included in the scan result message 304.

The node ID field 1006 may indicate the node ID assigned to the wireless node. The received signal strength field 1008 may indicate a received signal strength detected by the user terminal 114, 116, 118, 120 for the wireless node, and may be represented in units of decibels, according to an example embodiment. The path loss field 1010 may indicate a path loss for the wireless node detected by the user terminal 114, 116, 118, 120, according to an example embodiment.

After the wireless node 102 has confirmed the presence of some or all of the registered neighboring wireless nodes by receiving scan result message(s) 304 indicating the presence of some or all of the registered neighboring wireless nodes, the wireless node 102 may update the location database 126 by sending the location database 126 a list of the detected wireless nodes, which may include some or all of the registered neighboring wireless nodes included in the list of registered neighboring wireless nodes sent by the location database 126 to the wireless node 102. The list of detected wireless nodes may be included in the updated neighbor list message 402 sent to the location database 126 by the wireless node 102.

FIG. 11 is a block diagram showing the updated neighbor list message 402 according to an example embodiment. The updated neighbor list message 402 may include a message ID field 1102 identifying the neighbor list message 402 as an updated neighbor list message. The updated neighbor list message 402 may include a length field 1104 indicating a number of detected wireless nodes included in the list of detected wireless nodes. For each of the detected wireless nodes, the updated neighbor list 402 may include a neighbor ID field 1106, a carrier frequency field 1108, a bandwidth field 1110, and/or a duplexing scheme field 1112. The neighbor ID field 1106, a carrier frequency field 1108, a bandwidth field 1110, and duplexing scheme field 1112 may correspond to and/or contain information similar to the similarly named fields described with reference to FIGs. 8 and 9.

The location database 126 may send the wireless node 102 an update acknowledgment message 404 in response to receiving the updated neighbor list message 402. FIG. 12 is a block diagram showing the update acknowledgment message 404 according to an example embodiment. In this example, the update acknowledgment message 404 includes a message ID field 1202 identifying the update acknowledgment message 404 as an update acknowledgment message.

When the wireless node 102 needs more spectral resources, such as bandwidth, to operate or serve its user terminals 114, 116, 118, 120, the wireless node 102 may request information from the location database 126 regarding the neighboring wireless nodes. The wireless node 102 may request this information from the location database 126 (or a location database associated with another network, such as the radio access network 122, if the location database 126 is not shared by the different networks 100, 122) by sending the location database 126 the request neighbor list message 502. FIG. 13 is a block diagram showing the request neighbor list message 502 according to an example embodiment. In this example, the request neighbor list message 502 includes a message ID identifying the request neighbor list message 502 as a request neighbor list message.

In response to receiving the request neighbor list message 502, the location database 126 may send the wireless node 102 the neighbor list for sharing message 504. The neighbor list for sharing message 504 may include an updated list of registered neighboring wireless nodes. The location database may determine which wireless nodes to include in the updated list of registered neighboring wireless nodes based, for example, on the proximity of the wireless nodes (based on either the location provided by the wireless node 102 in the registration request message 202, or by estimating the location of the wireless node 102 based on the list of wireless nodes provided by the wireless node 102 in the registration request message 202), the transmission power of the wireless node 102 and/or other wireless nodes, and/or path loss factors of the wireless node 102 and/or other wireless nodes, such as carrier frequency and/or installation type (indoor or outdoor).

FIG. 14 is a block diagram showing the neighbor list for sharing message 504 according to an example embodiment. In this example, the neighbor list for sharing message 504 may include a message ID field 1402 identifying the neighbor list for sharing message 504 as a neighbor list for sharing message. The neighbor list for sharing message 504 may also include a length field 1404 indicating the number of wireless nodes included in the updated list of registered neighboring wireless nodes. The updated list of neighboring wireless nodes may include, for each wireless node in the list, a neighbor ID field 1406, a carrier frequency field 1408, a bandwidth field 1410, a duplexing scheme field 1412, and/or a capacity field 1414 field, according to an example embodiment. The neighbor ID field 1406, carrier frequency field 1408, bandwidth field 1410, and duplexing scheme field 1412 may correspond to and/or contain information similar to the similarly named fields described with reference to FIG.s. 8, 9, and 11.

The capacity field 1414 may indicate communication capacity, such as spectral capacity available time slots, which the respective node has available to lend. The communication capacity, such as available spectral capacity, may have been communicated to the location database 126 by the wireless node 102 and/or other wireless nodes periodically, or in response to polling requests by the location database 126 or a location database which serves the respective wireless node. The wireless node 102 may determine which wireless node(s) to request to borrow communication or spectral resources from based, at least in part, on the available spectral capacity indicated by the capacity field(s) 1414.

According to an example embodiment, the location database 126 may update the wireless node 102, as well as other wireless nodes, when a new wireless node registers with the location database 126. For example, the new wireless node may receive a neighbor list message similar to the neighbor list message 206 received by the wireless node 102. The location database 126 may send, to each wireless node included in the new wireless node's neighbor list, an updated neighbor list message similar to the neighbor list message 206. The neighbor list message may be sent upon registration of the new wireless node with the location database 126, or after the new wireless node has sent an updated neighbor list similar to the updated neighbor list 402, which is based upon receiving a scan result message similar to the scan result message 304 from user terminals within the new wireless node's coverage area.

In response to receiving the updated neighbor list, the wireless nodes, including the wireless node 102, may send an update acknowledgment to the location database, and may scan the spectrum for the new wireless node. If the wireless node 102 cannot detect the new wireless node, the wireless node 102 may request the user terminals 114, 116, 118, 120 to scan the spectrum for the new wireless node. If neither the wireless node 102 nor the user terminals 114, 116, 118, 120 can detect the new wireless node, the wireless node 102 may send an updated neighbor list message 402 to the location database, which may indicate that the new wireless node cannot be detected.

According to an example embodiment, a wireless node may send a de-registration message to the location database when it is no longer active in a certain band. For example, this message could be sent shortly before switching off the wireless node, or in the case of a change of configuration where the wireless node starts to operate in a different band. In the latter case also an update message could be sent. The update message may include the cancellation of the old registration and provides new operation information.

According to a further example embodiment in which neighboring nodes and/or networks are registered that have not been identified, a measurement flag may be added to that entry in the neighbor list requesting other nodes to scan for the unidentified nodes as well and provide further information. This method may provide additional information about the unidentified nodes and/or networks if the reason for not being able to identify the node is, for example, bad reception. However, in an example case in which the reason for lack of identification is that the unidentified network uses a technology that is not cooperating with the spectrum manager, the location database 126 could decide not to use this optional field.

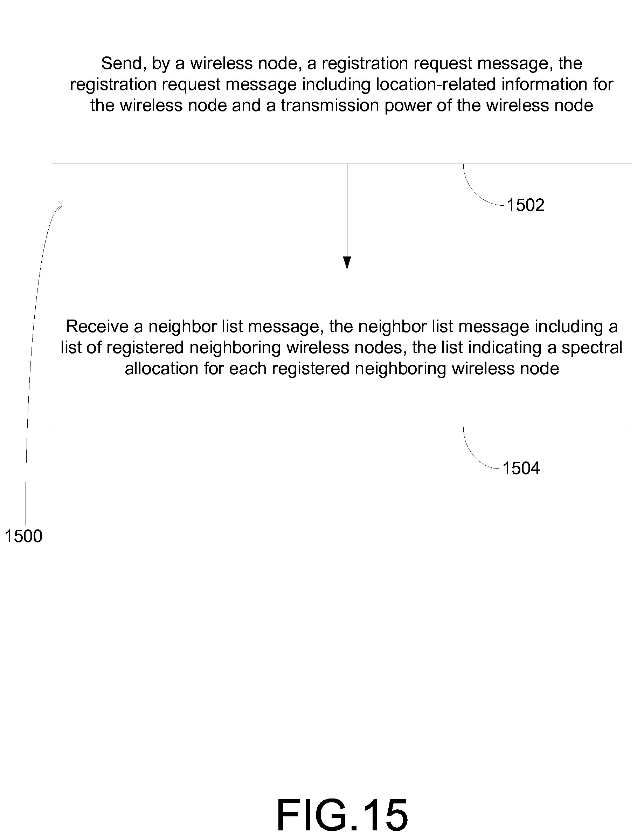

FIG. 15 is a flowchart showing a method 1500 according to an example embodiment. In this example, the method 1500 may include sending, by a wireless node 102, a registration request message 202, the registration request message 202 including location-related information for the wireless node 102 and a transmission power of the wireless node 102 (1502). According to an example embodiment, the location-related information may identify a specific physical location of the wireless node 102, and/or may be determined by measuring a distance between the wireless node 102 and a plurality of global positioning satellites. According to another example embodiment, the location-related information may include a list of detected neighboring wireless nodes. The registration request message 202 may further indicate whether the wireless node 102 is installed indoors or outdoors, and/or may indicate an antenna configuration of the wireless node 102.

The method 1500 may further include receiving a neighbor list message 206, the neighbor list message 206 including a list of registered neighboring wireless nodes, the list indicating a spectral allocation for each registered neighboring wireless node (1504). According to an example embodiment, the list may indicate the spectral allocation for each registered neighboring wireless node by indicating a carrier frequency, allocated bandwidth, duplexing scheme, transmission power, and/or wireless network for each registered neighboring wireless node.

According to an example embodiment, the method 1500 may further include receiving an acknowledgment 204 to the registration request message 202. The acknowledgment may include a node identification (ID) assigned to the wireless node 102.

According to an example embodiment, the method 1500 may further include receiving a spectrum assignment message, and transmitting data to a plurality of user terminals 114, 116, 118, 120 via the assigned spectrum.

According to an example embodiment, the method 1500 may further include sending a scan request message 302 to each of a plurality of user terminals 114, 116, 118, 120, the scan request message 302 including the list of registered neighboring wireless nodes. The method 1500 may further include receiving a scan result message 304 from each of the plurality of user terminals 114, 116, 118, 120. The scan result message 304 may include a list of at least some of the registered neighboring wireless nodes, a received signal strength of at least some of the registered neighboring wireless nodes, and/or a path loss of at least some of the registered neighboring wireless nodes.

The method 1500 may further include sending an updated neighbor list message 402. The updated neighbor list message 402 may include a list of at least some of the registered neighboring wireless nodes, and may be based on the scan result message 304 received from the user terminals 114, 116, 118, 120.

The method 1500 may further include sending a request neighbor list message 502, according to an example embodiment. According to this example, the method 1500 may further include receiving a neighbor list for sharing message 504. The neighbor list for sharing message 504 may include, for example, an updated list of registered neighboring wireless nodes and may indicate an available spectral capacity for each of the registered neighboring wireless nodes. The neighbor list for sharing message 504 may further indicate a spectral resource allocation for each of the registered neighboring wireless nodes, according to an example embodiment. The method 1500 may, for example, further include sending a request to borrow spectral capacity to at least one of the registered neighboring wireless nodes based on the indicated available spectral capacity.

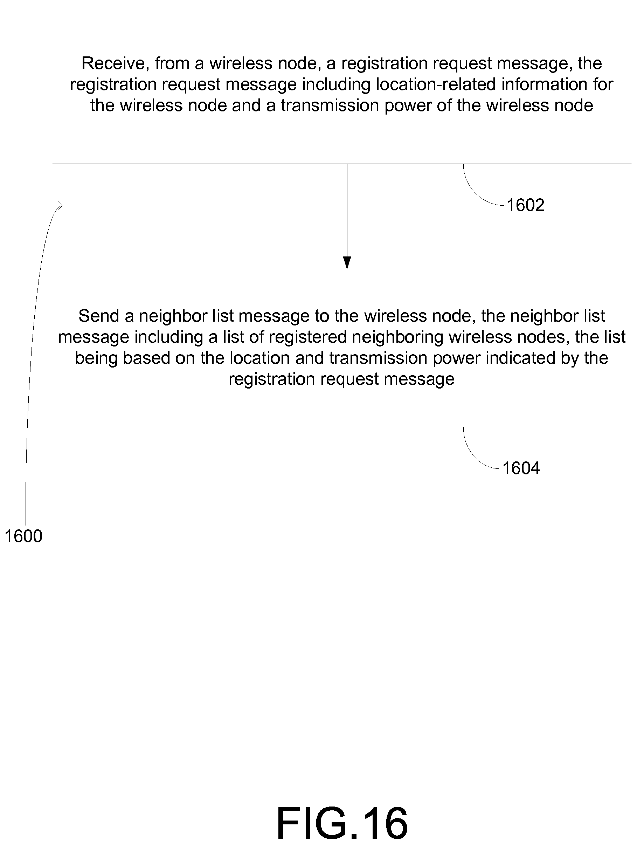

FIG. 16 is a flowchart showing a method 1600 according to another example embodiment. According to this example, the method 1600 may include receiving, from a wireless node 102, a registration request message 202, the registration request message 202 including location-related information for the wireless node 202 and a transmission power of the wireless node 202 (1602). According to an example embodiment, the location-related information may include location coordinates of the wireless node 102. According to another example, the location-related information may include a list of detected neighboring wireless nodes. The registration request message 202 may indicate whether the wireless node 102 is installed indoors or outdoors, and/or may indicate an antenna configuration of the wireless node 102.

The method 1600 may further include sending a neighbor list message 206 to the wireless node 102, the neighbor list message 102 including a list of registered neighboring wireless nodes, the list being based on the location and transmission power indicated by the registration request message 202 (1604). The list may indicate a spectral allocation for each registered neighboring wireless node, such as by indicating a carrier frequency and/or bandwidth for each registered neighboring wireless node. According to an example embodiment, the list may further indicate a duplexing scheme, transmission power, and/or wireless network for each registered neighboring wireless node.

According to an example embodiment, the method 1600 may further include sending an acknowledgment message 204 to the wireless node 102 in response to receiving the registration request message 202. The acknowledgment message 204 may include a node identification (ID) assigned to the wireless node 102.

According to an example embodiment, the method 1600 may further include receiving an updated neighbor list message 402 from the wireless node 102 and/or a second node. The updated neighbor list message 402 may include a list of some of the registered neighboring wireless nodes. The method 1600 may further include sending the wireless node 102 a neighbor list for sharing message 504. The neighbor list for sharing message 504 may, for example, include an updated list of registered neighboring wireless nodes, and may indicate an available spectral capacity for each of the registered neighboring wireless nodes.

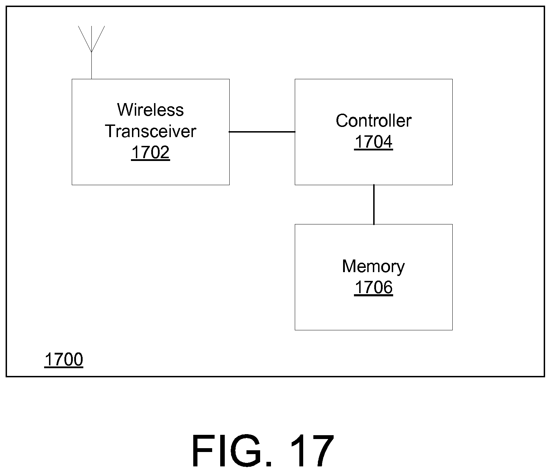

FIG. 17 is a block diagram showing an apparatus 1700 according to an example embodiment The apparatus (e.g. wireless node 106, 104, 106, 108, 110, 112, user terminal 114, 116, 118, 120, gateway 124, or location database 126) may include, for example, a wireless transceiver 1702 to transmit and receive signals, a controller 1704 to control operation of the station and execute instructions or software, and a memory 1706 to store data and/or instructions.

Controller 1704 may be programmable and capable of executing software or other instructions stored in memory or on other computer media to perform the various tasks and functions described above, such as one or more the tasks or methods described above.

In addition, a storage medium may be provided that includes stored instructions, when executed by a controller or processor that may result in the controller 1704, or other controller or processor, performing one or more of the functions or tasks described above.

Implementations of the various techniques described herein may be implemented in digital electronic circuitry, or in computer hardware, firmware, software, or in combinations of them. Implementations may implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program, such as the computer program(s) described above, can be written in any form of programming language, including compiled or interpreted languages, and can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps may be performed by one or more programmable processors executing a computer program to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in special purpose logic circuitry.

To provide for interaction with a user, implementations may be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Implementations may be implemented in a computing system that includes a back-end component, e.g., as a data server, or that includes a middleware component, e.g., an application server, or that includes a front-end component, e.g., a client computer having a graphical user interface or a Web browser through which a user can interact with an implementation, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

## Claims

1. A method in a first wireless node (102) of a first wireless network, comprising:
sending (202) a registration request message to a device (126);
wherein the registration request message includes location-related information of the first wireless node and communication-related information of the first wireless node;
receiving (206) a neighbor list message from the device;
wherein the neighbor list message includes a list of registered neighboring wireless nodes of at least a second wireless network, the list indicating a spectral allocation for each registered neighboring wireless node of the list;
wherein the registered neighboring wireless nodes comprise overlapping nodes;
wherein the overlapping nodes have coverage areas overlapping with that of the first wireless node; and
sending (502) a request neighbor list message to the device;
receiving (504) from the device a neighbor list for sharing message in response to the request neighbor list message, the neighbor list for sharing message including an updated list of registered neighboring wireless nodes and indicating an available spectral capacity for each of the registered neighboring wireless nodes; and
sending a request to borrow spectral capacity to at least one of the registered neighboring wireless nodes based on the indicated available spectral capacity.

2. The method of claim 1 wherein the sending includes sending the registration request message, the registration request message including the location- related information, the location-related information identifying at least one of: a specific physical location of the first wireless node; a list of detected neighboring wireless nodes.

3. The method of claim 1 or 2 wherein the sending includes sending the registration request message, the registration request message further indicating at least one of: at least one carrier frequency used by the first wireless node; an antenna configuration of the wireless node.

4. The method of any one of claims 1 to 3 further comprising receiving an acknowledgment to the registration request message, the acknowledgment including a node identification assigned to the first wireless node.

5. The method of any one of claims 1 to 4 wherein the receiving includes receiving the neighbor list message including the list of registered neighboring wireless nodes, the list indicating at least one of: the spectral allocation for each registered neighboring wireless node of the list by indicating an uplink carrier frequency and a downlink carrier frequency for each registered neighboring wireless node; the spectral allocation for each registered neighboring wireless node of the list by indicating a bandwidth allocated to each registered neighboring wireless node; a duplexing scheme for each registered neighboring wireless node; a transmission power for each registered neighboring wireless node of the list; a wireless network in which each registered neighboring wireless node of the list is included.

6. The method of any of one claims 1 to 5 further comprising: receiving a spectrum assignment message; and transmitting data to a plurality of user terminals via the assigned spectrum.

7. The method of any of one claims 1 to 6 further comprising: sending a scan request message to each of a plurality of user terminals, the scan request message including the list of registered neighboring wireless nodes; and receiving a scan result message from each of the plurality of user terminals, the scan result message including at least one of: a list of at least some of the registered neighboring wireless nodes; an indication of a received signal strength of at least some of the registered neighboring wireless nodes; an indication of a path loss of at least some of the registered neighboring wireless nodes.

8. The method of any one of claims 1 to 6 further comprising: sending a scan request message to each of a plurality of user terminals, the scan request message including the list of registered neighboring wireless nodes; receiving a scan result message from each of the plurality of user terminals, the scan result message including a list of at least some of the registered neighboring wireless nodes; and sending an updated neighbor list message, the updated neighbor list message including the list of at least some of the registered neighboring wireless nodes.

9. The method of any one of claims 1 to 8 further comprising: sending a request neighbor list message; and receiving a neighbor list for sharing message in response to the request neighbor list message, the neighbor list for sharing message including an updated list of registered neighboring wireless nodes and indicating an available spectral capacity for each of the registered neighboring wireless nodes of the list.

10. The method of any of claims 1 to 9, wherein the sending includes sending the registration request message, the registration request message including the location-related information of the first wireless node and communication-related information of the first wireless node, the communication-related information including at least one of: a transmission power of the first wireless node; an indication of whether the first wireless node is installed indoors or outdoors; a maximum coverage area of the first wireless node; an operation time of the first wireless node; a radio standard used by the first wireless node; a duplexing scheme used by the first wireless node; at least one carrier frequency range used by the first wireless node.

11. The method of any one of claims 1 to 10 wherein the receiving includes receiving the neighbor list message including the list of registered neighboring wireless nodes indicating communication-related information for each registered neighboring wireless node, the communication-related information including at least one of: a spectral allocation for each registered neighboring wireless node of the list; a radio technology used by each registered neighboring wireless node of the list.

12. A wireless node comprising means for performing the method of any one of preceding claims.

13. A computer-readable medium encoded with instructions that, when executed by a computer, cause performation of a method according to any of claims 1-11.

## Patentansprüche

1. Verfahren in einem ersten Drahtlosknoten (102) eines ersten Drahtlosnetzwerks, umfassend:
Senden (202) einer Registrierungsanforderungsnachricht an ein Gerät (126);
wobei die Registrierungsanforderungsnachricht standortbezogene Informationen des ersten Drahtlosknotens und kommunikationsbezogene Informationen des ersten Drahtlosknotens beinhaltet;
Empfangen (206) einer Nachbarlistennachricht vom Gerät;
wobei die Nachbarlistennachricht eine Liste von registrierten benachbarten Drahtlosknoten mindestens eines zweiten Drahtlosnetzwerks beinhaltet, wobei die Liste eine spektrale Zuweisung für jeden registrierten benachbarten Drahtlosknoten der Liste angibt;
wobei die registrierten benachbarten Drahtlosknoten überlappende Knoten umfassen; wobei die überlappenden Knoten Abdeckungsbereiche aufweisen, die sich mit dem des ersten Drahtlosknotens überlappen; und
Senden (502) einer Nachbarlistenanforderungsnachricht an das Gerät;
Empfangen (504), vom Gerät, einer Nachricht mit einer Nachbarliste zur gemeinsamen Nutzung als Antwort auf die Nachbarlistenanforderungsnachricht, wobei die Nachricht mit der Nachbarliste zur gemeinsamen Nutzung eine aktualisierte Liste registrierter benachbarter Drahtlosknoten beinhaltet und eine verfügbare spektrale Kapazität für jeden der registrierten benachbarten Drahtlosknoten angibt; und
Senden einer Anforderung zum Entleihen spektraler Kapazität an mindestens einen der registrierten benachbarten Drahtlosknoten auf der Grundlage der angegebenen verfügbaren spekralen Kapazität.

2. Verfahren nach Anspruch 1, wobei das Senden das Senden der Registrierungsanforderungsnachricht beinhaltet, wobei die Registrierungsanforderungsnachricht die standortbezogenen Informationen beinhaltet, wobei die standortbezogenen Informationen mindestens eines der folgenden Elemente identifizieren: einen spezifischen physischen Standort des ersten Drahtlosknotens; eine Liste erfasster benachbarter Drahtlosknoten.

3. Verfahren nach Anspruch 1 oder 2, wobei das Senden das Senden der Registrierungsanforderungsnachricht beinhaltet, wobei die Registrierungsanforderungsnachricht ferner mindestens eines der folgenden Elemente angibt: mindestens eine Trägerfrequenz, die vom ersten Drahtlosknoten verwendet wird; eine Antennenauslegung des Drahtlosknotens.

4. Verfahren nach einem der Ansprüche 1 bis 3, ferner umfassend das Empfangen einer Bestätigung für die Registrierungsanforderungsnachricht, wobei die Bestätigung eine dem ersten Drahtlosknoten zugewiesene Knotenkennung beinhaltet.

5. Verfahren nach einem der Ansprüche 1 bis 4, wobei das Empfangen das Empfangen der Nachbarlistennachricht einschließlich der Liste registrierter benachbarter Drahtlosknoten beinhaltet, wobei die Liste mindestens eines der folgenden Elemente angibt: die spektrale Zuweisung für jeden registrierten benachbarten Drahtlosknoten der Liste durch Angabe einer Uplink-Trägerfrequenz und einer Downlink-Trägerfrequenz für jeden registrierten benachbarten Drahtlosknoten; die spektrale Zuweisung für jeden registrierten benachbarten Drahtlosknoten der Liste durch Angabe einer Bandbreite, die jedem registrierten benachbarten Drahtlosknoten zugewiesen ist; ein Duplex-Schema für jeden registrierten benachbarten Drahtlosknoten; eine Sendeleistung für jeden registrierten benachbarten Drahtlosknoten der Liste; ein Drahtlosnetzwerk, in dem jeder registrierte benachbarte Drahtlosknoten der Liste enthalten ist.

6. Verfahren nach einem der Ansprüche 1 bis 5, ferner umfassend: Empfangen einer Spektrumszuweisungsnachricht; und Übertragen von Daten an eine Vielzahl von Benutzerendgeräten auf dem zugewiesenen Spektrum.

7. Verfahren nach einem der Ansprüche 1 bis 6, ferner umfassend: Senden einer Ermittlungsanforderungsnachricht an jedes einer Vielzahl von Benutzerendgeräten, wobei die Ermittlungsanforderungsnachricht die Liste registrierter benachbarter Drahtlosknoten enthält; und Empfangen einer Ermittlungsergebnisnachricht von jedem der Vielzahl von Benutzerendgeräten, wobei die Ermittlungsergebnisnachricht mindestens eines der folgenden Elemente beinhaltet: eine Liste zumindest einiger der registrierten benachbarten Drahtlosknoten; eine Angabe einer Empfangssignalstärke zumindest einiger der registrierten benachbarten Drahtlosknoten; eine Angabe eines Pfadverlusts zumindest einiger der registrierten benachbarten Drahtlosknoten.

8. Verfahren nach einem der Ansprüche 1 bis 6, ferner umfassend: Senden einer Ermittlungsanforderungsnachricht an jedes einer Vielzahl von Benutzerendgeräten, wobei die Ermittlungsanforderungsnachricht die Liste registrierter benachbarter Drahtlosknoten beinhaltet; Empfangen einer Ermittlungsergebnisnachricht von jedem der Vielzahl von Benutzerendgeräten, wobei die Ermittlungsergebnisnachricht eine Liste zumindest einiger der registrierten benachbarten Drahtlosknoten beinhaltet; und Senden einer aktualisierten Nachbarlistennachricht, wobei die aktualisierte Nachbarlistennachricht die Liste zumindest einiger der registrierten benachbarten Drahtlosknoten enthält.

9. Verfahren nach einem der Ansprüche 1 bis 8, ferner umfassend: Senden einer Nachbarlistenanforderungsnachricht; und Empfangen einer Nachricht mit einer Nachbarliste zur gemeinsamen Nutzung als Antwort auf die Nachbarlistenanforderungsnachricht, wobei die Nachricht mit der Nachbarliste zur gemeinsamen Nutzung eine aktualisierte Liste registrierter benachbarter Drahtlosknoten beinhaltet und eine verfügbare spekrale Kapazität für jeden der registrierten benachbarten Drahtlosknoten der Liste angibt.

10. Verfahren nach einem der Ansprüche 1 bis 9, wobei das Senden das Senden der Registrierungsanforderungsnachricht beinhaltet, wobei die Registrierungsanforderungsnachricht die standortbezogenen Informationen des ersten Drahtlosknotens und kommunikationsbezogene Informationen des ersten Drahtlosknotens beinhaltet, wobei die kommunikationsbezogenen Informationen mindestens eines der folgenden Elemente beinhalten: eine Sendeleistung des ersten Drahtlosknotens; eine Angabe, ob der erste Drahtlosknoten in einem Gebäude oder im Freien installiert ist; einen maximalen Abdeckungsbereich des ersten Drahtlosknotens; eine Betriebszeit des ersten Drahtlosknotens; einen vom ersten Drahtlosknoten verwendeten Funkstandard; ein vom ersten Drahtlosknoten verwendetes Duplex-Schema; mindestens einen vom ersten Drahtlosknoten verwendeten Trägerfrequenzbereich.

11. Verfahren nach einem der Ansprüche 1 bis 10, wobei das Empfangen das Empfangen der Nachbarlistennachricht einschließlich der Liste registrierter benachbarter Drahtlosknoten unter Angabe der kommunikationsbezogenen Informationen für jeden registrierten benachbarten Drahtlosknoten beinhaltet, wobei die kommunikationsbezogenen Informationen mindestens eines der folgenden Elemente beinhalten: eine spektrale Zuweisung für jeden registrierten benachbarten Drahtlosknoten der Liste; eine von jedem registrierten benachbarten Drahtlosknoten der Liste verwendete Funktechnologie.

12. Drahtlosknoten, umfassend Mittel zum Durchführen des Verfahrens nach einem der vorhergehenden Ansprüche.

13. Computerlesbares Medium, das mit Anweisungen programmiert ist, die bei ihrer Ausführung durch einen Computer die Ausführung eines Verfahrens nach einem der Ansprüche 1 bis 11 bewirken.

## Revendications

1. Procédé dans un premier nœud sans fil (102) d'un premier réseau sans fil, comprenant :
l'envoi (202) d'un message de demande d'enregistrement à un dispositif (126),
le message de demande d'enregistrement incluant une information relative à la localisation du premier nœud sans fil et une information relative à la communication du premier nœud sans fil ;
la réception (206) d'un message de liste de voisins en provenance du dispositif,
le message de liste de voisins incluant une liste de nœuds sans fil voisins enregistrés d'au moins un second réseau sans fil, la liste indiquant une affectation spectrale pour chaque nœud sans fil voisin enregistré de la liste,
les nœuds sans fil voisins enregistrés comprenant des nœuds chevauchants,
les nœuds chevauchants ayant des zones de couverture chevauchant celle du premier nœud sans fil ; et
l'envoi (502) d'un message de liste de voisins de demande au dispositif ;
la réception (504), en provenance du dispositif, d'une liste de voisins pour partager un message en réponse au message de liste de voisins de demande, la liste de voisins pour partager un message incluant une liste mise à jour de nœuds sans fil voisins enregistrés et indiquant une capacité spectrale disponible pour chacun des nœuds sans fil voisins enregistrés ; et
l'envoi d'une demande d'emprunt de capacité spectrale à au moins un des nœuds sans fil voisins enregistrés sur la base de la capacité spectrale disponible indiquée.

2. Procédé selon la revendication 1, dans lequel l'envoi inclut l'envoi du message de demande d'enregistrement, le message de demande d'enregistrement incluant l'information relative à la localisation, l'information relative à la localisation identifiant au moins un élément parmi : une localisation physique spécifique du premier nœud sans fil ; une liste de nœuds sans fil voisins détectés.

3. Procédé selon la revendication 1 ou 2, dans lequel l'envoi inclut l'envoi du message de demande d'enregistrement, le message de demande d'enregistrement indiquant en outre au moins un élément parmi : au moins une fréquence porteuse utilisée par le premier nœud sans fil ; une configuration d'antenne du nœud sans fil.

4. Procédé selon l'une quelconque des revendications 1 à 3, comprenant en outre : la réception d'un accusé de réception du message de demande d'enregistrement, l'accusé de réception incluant une identification de nœud attribuée au premier nœud sans fil.

5. Procédé selon l'une quelconque des revendications 1 à 4, dans lequel la réception inclut la réception du message de liste de voisins incluant la liste de nœuds sans fil voisins enregistrés, la liste indiquant au moins un élément parmi : l'affectation spectrale pour chaque nœud sans fil voisin enregistré de la liste en indiquant une fréquence porteuse en liaison montante et une fréquence porteuse en liaison descendante pour chaque nœud sans fil voisin enregistré ; l'affectation spectrale pour chaque nœud sans fil voisin enregistré de la liste en indiquant une bande passante affectée à chaque nœud sans fil voisin enregistré ; un schéma de duplexage pour chaque nœud sans fil voisin enregistré ; une puissance de transmission pour chaque nœud sans fil voisin enregistré de la liste ; un réseau sans fil où est inclus chaque nœud sans fil voisin enregistré de la liste.

6. Procédé selon l'une quelconque des revendications 1 à 5, comprenant en outre : la réception d'un message d'attribution de spectre ; et la transmission de données à une pluralité de terminaux d'utilisateur par l'intermédiaire du spectre attribué.

7. Procédé selon l'une quelconque des revendications 1 à 6, comprenant en outre : l'envoi d'un message de demande d'analyse à chaque terminal d'utilisateur d'une pluralité de terminaux d'utilisateur, le message de demande d'analyse incluant la liste de nœuds sans fil voisins enregistrés ; et la réception d'un message de résultat d'analyse en provenance de chaque terminal d'utilisateur de la pluralité de terminaux d'utilisateur, le message de résultat d'analyse incluant au moins un élément parmi : une liste d'au moins certains des nœuds sans fil voisins enregistrés ; une indication d'une puissance de signal reçu d'au moins certains des nœuds sans fil voisins enregistrés ; une indication d'un affaiblissement de propagation d'au moins certains des nœuds sans fil voisins enregistrés.

8. Procédé selon l'une quelconque des revendications 1 à 6, comprenant en outre : l'envoi d'un message de demande d'analyse à chaque terminal d'utilisateur d'une pluralité de terminaux d'utilisateur, le message de demande d'analyse incluant la liste de nœuds sans fil voisins enregistrés ; la réception d'un message de résultat d'analyse en provenance de chaque terminal d'utilisateur de la pluralité de terminaux d'utilisateur, le message de résultat d'analyse incluant une liste d'au moins certains des nœuds sans fil voisins enregistrés ; et l'envoi d'un message de liste de voisins mis à jour, le message de liste de voisins mis à jour incluant la liste d'au moins certains des nœuds sans fil voisins enregistrés.

9. Procédé selon l'une quelconque des revendications 1 à 8, comprenant en outre : l'envoi d'un message de liste de voisins de demande ; et la réception d'une liste de voisins pour partager un message en réponse au message de liste de voisins de demande, la liste de voisins pour partager un message incluant une liste mise à jour de nœuds sans fil voisins enregistrés et indiquant une capacité spectrale disponible pour chacun des nœuds sans fil voisins enregistrés de la liste.

10. Procédé selon l'une quelconque des revendications 1 à 9, dans lequel l'envoi inclut l'envoi du message de demande d'enregistrement, le message de demande d'enregistrement incluant l'information relative à la localisation du premier nœud sans fil et l'information relative à la communication du premier nœud sans fil, l'information relative à la communication incluant au moins un élément parmi : une puissance de transmission du premier nœud sans fil ; une indication indiquant si le premier nœud sans fil est installé en intérieur ou en extérieur ; une zone de couverture maximale du premier nœud sans fil ; un temps de fonctionnement du premier nœud sans fil ; une norme radio utilisée par le premier nœud sans fil ; un schéma de duplexage utilisé par le premier nœud sans fil ; au moins une plage de fréquences porteuses utilisée par le premier nœud sans fil.

11. Procédé selon l'une quelconque des revendications 1 à 10, dans lequel la réception inclut la réception du message de liste de voisins incluant la liste de nœuds sans fil voisins enregistrés indiquant une information relative à une communication pour chaque nœud sans fil voisin enregistré, l'information relative à la communication incluant au moins un élément parmi : une affectation spectrale pour chaque nœud sans fil voisin enregistré de la liste ; une technologie radio utilisée par chaque nœud sans fil voisin enregistré de la liste.

12. Nœud sans fil comprenant un moyen permettant de réaliser le procédé selon l'une quelconque des revendications précédentes.

13. Support lisible par ordinateur, codé avec des instructions qui, lorsqu'elles sont exécutées par un ordinateur, provoquent la réalisation d'un procédé selon l'une quelconque des revendications 1 à 11.
